# EUROPEAN PATENT APPLICATION

(11) **EP 4 484 743 A1**
(43) Date of publication of application: **01.01.2025**
(21) Application number: 23202619.5
(22) Date of filing: 10.10.2023
(51) Int. Cl.: F03D 7/02

(54) **METHOD FOR OPERATING A WIND TURBINE AND WIND TURBINE**

(30) Priority: 30.06.2023 EP 23382674
(71) Applicant: Nordex Energy Spain, S.A.U., 31395 Barasoain (Navarra) (ES); Nordex Energy SE & Co. KG, 22419 Hamburg (DE)
(72) Inventor: GELLERMANN, Jan, 22419 Hamburg (DE); MANITZ, Jan Erik, 22419 Hamburg (DE); GIL, Pablo, 31395 Barasoain (ES); RESANO, Javier Pascual, 31395 Barasoain (ES); WILHELM, Herry, 22419 Hamburg (DE); KRUTH, Stefan, 22419 Hamburg (DE); GIL SOTO, Jose Javier, 31395 Barasoain (ES); HELLMICH, Bernd, 22419 Hamburg (DE)
(74) Representative: Epping - Hermann - Fischer

(57) **Abstract**

The method for operating a wind turbine (100) having a rotatable component (1 to 4) and at least two drives (di) for rotating the rotatable component by exerting torques comprises a step of providing first information (11) which is representative of a position setpoint (Pn) of the rotatable component. In a further step, operating setpoints (OS_i) are determined depending on the first information such that, when the drives are operated according to the operating setpoints, the drives bring or keep the rotatable component at the position setpoint by exerting torques. The operating setpoints are determined such that, at least when the position of the rotatable component is to be kept constant, less than half of the drives exert a torque in a critical torque range around the value of 0.

## Description

The present disclosure relates to a method for operating a wind turbine. Furthermore, the disclosure relates to a computer program, a computer-readable data carrier, a control system and a wind turbine.

Wind turbines are widely known and are used to convert wind energy into electrical energy. Some components of the wind turbine, like the nacelle or the rotor blades, need to be rotated during operation. The components used for the rotation are subject to high loads.

One object to be achieved is to provide a method which contributes to a gentle operation of the wind turbine, particularly a method which contributes to a reduction of backlash movements and banging noises. Further objects to be achieved are to provide a computer program, a computer-readable data carrier, a control system and a wind turbine for executing such a method.

First, the method for operating a wind turbine is specified. Three aspects of the method are described in the following.

In an embodiment of the first aspect, the method is for operating a wind turbine having a rotatable component and at least two drives for rotating the rotatable component by exerting torques. The method comprises a step of providing first information which is representative of a position setpoint of the rotatable component. In a further step, operating setpoints for the drives are determined depending on the first information such that, when the drives are operated according to the operating setpoints, the drives bring or keep the rotatable component at the position setpoint by exerting torques. The operating setpoints are determined such that, at least when the position of the rotatable component is to be kept constant, less than half of the drives exert a torque in a critical torque range around the value of 0.

The present invention is, inter alia, based on the idea of reducing damage to components of a wind turbine, particularly of the drives for rotating a rotatable component, by preventing the drives from operating at or near a torque of 0 Nm. When a drive does not exert torque or exerts a very low torque, small changes in the operation conditions may cause the operation of the drive to switch from positive torque to negative torque or vice versa. This undefined state mainly appears when the position of the rotatable component is kept constant and creates a lot of vibrations (backlash movements) as well as associated banging noises. By choosing the operation of the drives such that the number of drives acting in this critical torque range is kept low, wear and banging noises can be reduced.

The method specified herein is, in particular, a computer implemented method, i.e. is performed with the help of a computer or a processor.

A setpoint herein defines a certain target to be achieved when operating the wind turbine. For example, the position setpoint is the target value of the position of the rotatable component. The operating setpoint defines the target operation of a drive. An operating setpoint for a drive is, in particular, equivalent to control/operation information for the drive.

Herein, when information is representative of a certain quantity or certain quantities, this means that the quantity or quantities can be extracted from the information, either directly, or the quantity/quantities can at least be derived from the information. In other words, the quantity/quantities is/are stored in the information, or at least data are stored in the information, from which the quantity/quantities can be derived or determined or calculated, respectively. Furthermore, here and in the following, information is, in particular, electronic information, like electronic data.

The drives may each comprise an electric motor. Moreover, each drive may comprise a gearbox and a pinion. The electric motors apply an input rotational speed and an input torque to the gearbox, which is thereby transformed to an output rotational speed and an output torque and is applied to the pinion. By way of example, the transmission ratio between the input rotational speed and the output rotational speed of the gearbox of each drive is at least 100 or at least 1000. That is, the electric motor, on one side of the gearbox, rotates at least 100 or at least 1000 times faster than the pinion on the other side of the gearbox.

The drives may be attached to the rotatable component so that they rotate together with the rotatable component. For example, the drives then mesh with and exert torques to a non-rotatable element, which in turn may cause the rotation of the rotatable component. Alternatively, the drives are rotationally fixed and do not rotate together with the rotational component. The drives may then mesh with the rotatable component and may exert torques to it, which can cause its rotation.

The first information is representative of a position setpoint of the rotatable component. The position setpoint is, in particular, an angle between 0° and 360°.

The operating setpoints for the drives are determined depending on the first information. Particularly, an operating setpoint is determined for each drive, wherein the operating setpoint assigned to a drive defines the operation of that drive. For each drive, the corresponding operating setpoint may be or may be representative of a current setpoint or a torque setpoint.

The operating setpoints are determined such that, when the drives are operated according to the operating setpoints, the drives bring or keep the rotatable component at the position setpoint by exerting torques. In other words, the operating setpoints are configured to cause an operation of the drives such that the drives bring or keep the rotatable component at the position setpoint by exerting torques. To bring or keep the rotatable component at the position setpoint means that the drives are operated such that the difference between the actual position of the rotatable component and the position setpoint is minimized. In other words, the rotatable component is kept in or brought to a position which corresponds to the position setpoint.

That the position of the rotatable is to be kept constant particularly means that the rotatable component is at the position setpoint and the position setpoint is kept constant, e.g. for a certain time, such as at least 5 s or at least 10 s. At least in this case, the operating setpoints are determined such that less than half of the drives are operated in the critical torque range. Thus, in the case of a total of two drives, 0 drives are operated in the critical torque range. In the case of three drives, 0 or 1 drive is operated in the critical torque range and so on. Preferably, the operating setpoints are determined such that, at least when the position of the rotatable component is to be kept constant, at most one drive exerts a torque in the critical torque range.

Also when the position of the rotatable component is to be changed, e.g. when the position setpoint changes, the operating setpoints may be determined such that less than half of the drives exerts a torque in the critical torque range around the value of 0. In the following, only the situation in which the position of the rotatable is to be kept constant is considered. However, all features disclosed for this situation may likewise apply to the situation where the position of the rotatable component is to be changed.

The critical torque range may be a predetermined torque range, for example a fixed range. The critical torque range includes the value of 0, e.g. is symmetrical around the value of 0. The critical torque range may be any range between - 0.2·|Mmax| and +0.2·|Mmax| or between -0.1·|Mmax| and +0.1·|Mmax| or between -0.05·|Mmax| and +0.05·|Mmax|. Mmax is the value of the maximum torque which can be provided by a single drive. By way of example, the critical torque range is a range between -5 Nm and 5 Nm or between -4 Nm and +4 Nm or between - 3 Nm and + 3 Nm. Herein, when concrete values for the torques of the drives or for the torque difference of the drives are specified, these values refer, for example, to the input torques supplied to the gearboxes, i.e. the torques as provided by the electric motors and before the torques are transformed by the gearboxes.

Furthermore, when torques are different, herein this means that the torques are set to be different, i.e. they are different on purpose.

At least in the case that no or low external torque acts on the rotatable component, i.e. if the external torque is below a first threshold value, the drives may be operated with different torques, i.e. with a torque difference between at least two drives. The drives may then be tensioned against each other. The first threshold value may correspond to an average torque exerted by the drives which is between 30% and 80% or between 30% and 50% of Mmax. For example, the torque difference is then set to be at least 0.01.|Mmax| or at least 0.05.|Mmax|. By properly setting the different torques of the drives, it can be achieved that less than half of the drives exert torques in the critical torque range, at least when the position of the rotatable component is to be kept constant. Particularly, the operating setpoints may then be determined such that the torque difference between at least two drives is greater than the critical torque range.

At a higher external torque, e.g. when the external torque is above the first threshold, the drives may all be operated with the same torque, which is outside the critical torque range. The external torque is, in particular, torque which is not induced by the drives but torque against which the drives have to fight.

According to a further embodiment of the first aspect, the wind turbine comprises at least three drives for rotating the rotatable component. For example, the wind turbine comprises four or more drives, particularly six drives, for rotating the rotatable component.

According to a further embodiment of the first aspect, the operating setpoints are determined such that, at least when the position of the rotatable component is to be kept constant, each two drives exert different torques. Thus, at least when the position of the rotatable component is to be kept constant, no two drives exert the same torque.

Operating each drive with a different torque is one measure for keeping the number of drives exerting a torque in the critical torque range low. Particularly, the drives may be operated like this when the external torque is below the first threshold.

For example, the torque difference between each two drives is then a predetermined and/or fixed value. The torque difference between each two drives may then be at least 0.01·|Mmax| or at least 0.05·|Mmax|. The torque differences between the drives may be chosen such that at most one drive can be in the critical torque range at the same time. The torque difference between at least two of the drives is, for example, greater than the critical torque range. Particularly, the torque difference between each two drives is then larger than the critical torque range.

According to a further embodiment of the first aspect, the method comprises a step of providing second information which is representative of a torque difference setpoint between the torques exerted by the drives. The torque difference setpoint is the target value of the absolute value of the torque difference between the torques of two drives. In the case of more than two drives, the second information may be representative of several torque difference setpoints. For example, one drive is treated as a master drive and the torque difference setpoint for each drive refers to the torque difference between the drive and the master drive.

According to a further embodiment of the first aspect, the operating setpoints are determined also depending on the second information in order to make the torques exerted by the drives to fulfill the torque difference setpoint. For example, in order to realize that each two drives exert different torques, the torque difference setpoints for each two drives are different.

According to a further embodiment of the first aspect, the second information is determined during operation of the wind turbine. For example, during operation of the wind turbine, the second information is repeatedly or continuously determined.

According to a further embodiment of the first aspect, determining the second information comprises adapting the torque difference setpoint in order to avoid drives to exert torques in the critical torque range, at least when the position of the rotatable component is to be kept constant. That is, the torque difference setpoint is or can be dynamically changed during operation in order to keep the number of drives being operated with torques in the critical torque range low. Indeed, changing the torque difference setpoint is another measure for keeping the number of drives exerting torques in the critically torque range low.

For example, having provided a certain torque difference setpoint between two drives, the operating conditions may now change, e.g. due to an increased wind speed or increased external torque, respectively. If, with the previously provided torque difference setpoint, the operating setpoints can only be determined such that at least one drive would have to be operated with a torque in the critical torque range in order to keep the rotatable component in the constant position, the torque difference setpoint is changed (increased or reduced) such that, with the operating setpoints determined depending on this changed torque difference setpoint, all drives will exert torques outside the critical torque range while keeping the rotatable component in the constant position.

Changing of the torque difference setpoint between two drives is, for example, constrained. The constraint may be a maximum allowed torque difference setpoint. The maximum allowed torque difference setpoint is, for example, at most 70% or at most 50% of |Mmax|. By way of example, it may be a value between 20 Nm and 100 Nm or between 30 Nm and 100 Nm or between 40 Nm and 80 Nm.

In the case that the torque difference setpoint is adapted, the drives may be assigned to two different groups, namely a first group and a second group. Each group may be assigned the same number of drives. The operating setpoints may be determined such that, when they are used for operating the drives, all drives in the first group exert the same torques. Likewise, the operating setpoints may be determined such that, when they are used for operating the drives, all drives in the second group exert the same torques.

According to a further embodiment of the first aspect, the second information is determined such that the number of drives which are operated with a torque in the critical torque range is minimized while, at the same time, the torque difference setpoint between each two drives is kept below the maximum allowed torque difference setpoint.

According to a further embodiment of the first aspect, the method comprises a step of providing third information. The third information is representative of the actual torque difference between the actual torques exerted by the drives. By way of example, the actual electric currents with which the electric motors are actually operated are determined and these currents are then stored in the third information. The actual electric currents may be determined from the PWM-signals transmitted to the drives by using a motor model. Indeed, the electric current is proportional to the torque so that the difference between the currents of the electric motors is representative of the difference between the torques. Alternatively, it may be possible to directly measure the torques provided by the drives or the torque difference and to store these measurements in the third information.

According to a further embodiment of the first aspect, the operating setpoints are determined also depending on the third information, e.g. by using a feedback loop, particularly a negative feedback loop, with the second and the third information as input information so that the difference between the torque difference setpoint and the actual torque difference is minimized. Particularly, the second and the third information are repeatedly or continuously provided and compared. Depending on this, the operating setpoints are repeatedly or continuously determined or adjusted, respectively, in order to make the actual torque difference to match the torque difference setpoint.

Determining the operating setpoints depending on the second and the third information by using the feedback loop may be realized with the help of a controller, herein also called "tension controller". The tension controller is, for example, a proportional (P-) controller. For example, depending on the deviation between the actual torque difference and the torque difference setpoint, the tension controller determines at least one actuating variable. The operating setpoints may be representative of this actuating variable and/or may be determined depending on this actuating variable. By being operated according to the operating setpoints, the operation of the drives can then be adjusted according to the actuating variable.

According to a further embodiment of the first aspect, the method comprises a step of providing fourth information which is representative of rotational speed setpoints of the drives. The rotational speed setpoints are the target values of the rotational speeds of the drives for bringing or keeping the rotatable component at the position setpoint. For example, the fourth information is determined depending on the first information. That is, the rotational speed setpoints may be determined depending on the position setpoint.

The "rotational speeds of the drives" herein means, in particular, the rotational speeds as input into the gearboxes, i.e. as provided by the electric motors.

According to a further embodiment of the first aspect, the method comprises a step of providing fifth information which is representative of the actual rotational speeds of the drives. The actual rotational speeds of the drives may be determined with the help of measurements. For example, incremental encoders may be used to measure the rotational speeds of the drives.

According to a further embodiment of the first aspect, the operating setpoints are determined also depending on the fourth and the fifth information. Particularly, the operating setpoints are determined by using further feedback loops with the fourth and the fifth information as input information so that the differences between the actual rotational speeds and the corresponding rotational speed setpoints are minimized. The feedback loops are, in particular, negative feedback loops. For example, the fourth and fifth information are repeatedly or continuously provided and compared. Depending on this, the operating setpoints are determined repeatedly or continuously in order to make the actual rotational speeds to match the rotational speed setpoints.

By way of example, each of the drives is assigned a controller, like a PI (proportional-integral) controller, herein also called "speed controllers". The speed controllers may then determine actuating variables, depending on the deviations between the actual rotational speeds and the rotational speed setpoints. The operating setpoints are then, for example, these actuating variables.

According to a further embodiment of the first aspect, the method comprises the step of determining sixth information depending on the second and the third information. The sixth information is representative of an offset rotational speed and the offset rotational speed depends on the difference between the torque difference setpoint and the actual torque difference. The offset rotational speed is, in particular, a target difference between the rotational speeds of the drives. The greater the difference between the torque difference setpoint and the actual torque difference, the greater the offset rotational speed.

Determining the sixth information may be done by the above-mentioned tension controller. By way of example, the offset rotational speed is the actuating variable determined with the tension controller.

According to a further embodiment of the first aspect, the fourth information is determined depending on the sixth information such that the rotational speed setpoint of at least one drive is the rotational speed setpoint of another drive minus the offset rotational speed. By way of example, if the actual torque difference is much smaller than the torque difference setpoint, the offset rotational speed is determined to be comparatively large and, accordingly, the rotational speed setpoints of the drives are much different. On the other hand, if the actual torque difference is equal to the torque difference setpoint, then the offset rotational speed may be smaller or may be zero.

According to a further embodiment of the first aspect, the method comprises a step of providing seventh information which is representative of the actual position of the rotatable component. The seventh information may be determined depending on measurements. For example, the rotational position of the rotatable component is determined with the help of an incremental encoder.

According to a further embodiment of the first aspect, the operating setpoints are determined also depending on the seventh information. For example, this is done by using a further feedback loop, particularly a negative feedback loop, with the first and the seventh information as input information so that the difference between the actual position and the position setpoint is minimized. That is, also the seventh information and, if applicable, the first information may be repeatedly or continuously provided and, accordingly, the operating setpoints are repeatedly or continuously determined and generated depending on the first and the seventh information in order to make the actual position to match the position setpoint.

This feedback loop may be realized with the help of a further controller, herein also referred to as "position controller". Depending on the deviation between the actual position and the position setpoint, the position controller determines actuating variables, wherein the operating setpoints may be determined depending on these actuating variables. The actuating variables are, for example, the rotational speed setpoints.

According to a further embodiment of the first aspect, the rotatable component is a component of a yaw system of the wind turbine. For example, the rotatable component is a nacelle of the wind turbine or a carrier for a nacelle or a yaw bearing.

According to a further embodiment of the first aspect, the rotatable component is a component of a pitch system of the wind turbine. For example, the rotatable component is a rotor blade of the wind turbine or a carrier for a rotor blade or a pitch bearing.

In an embodiment of the second aspect, the method is for operating a wind turbine having a rotatable component and at least three drives for rotating the rotatable component by exerting torques. The method comprises a step of providing first information which is representative of a position setpoint of the rotatable component. In a further step, operating setpoints for the drives are determined depending on the first information such that, when the drives are operated according to the operating setpoints, the drives bring or keep the rotatable component at the position setpoint by exerting torques and such that, at least temporarily, each two drives exert different torques.

"At least temporarily" means temporarily or permanently. Particularly when the position of the rotatable component is to be kept constant, and optionally in every other situation, the operating setpoints are determined such that each two drives exert different torques.

In an embodiment of the third aspect, the method is for operating a wind turbine having a rotatable component and at least two drives for rotating the rotatable component by exerting torques. The method comprises a step of providing first information which is representative of a position setpoint of the rotatable component and a step of determining second information which is representative of a torque difference setpoint between the torques exerted by the drives. The second information is determined during operation of the wind turbine. In a further step, operating setpoints for the drives are determined depending on the first and the second information such that, when the drives are operated according to the operating setpoints, the drives bring or keep the rotatable component at the position setpoint by exerting torques, whereby the torques exerted by the drives fulfill the torque difference setpoint. Determining the second information comprises adapting the torque difference setpoint in order to avoid drives to exert torques in the critical torque range, at least when the position of the rotatable component is to be kept constant.

All features disclosed in connection with the first aspect are correspondingly also disclosed for the second and the third aspect and vice versa.

Next, the computer program, the computer-readable data carrier and the control system are specified.

According to an embodiment, the computer program comprises instructions which, when the program is executed by a control system, cause the control system to carry out the method for operating a wind turbine according to any one of the embodiments described herein.

According to an embodiment, the computer-readable data carrier has the computer program stored thereon.

According to an embodiment, the control system comprises means configured to execute the method for operating a wind turbine according to any one of the embodiments described herein. Particularly, the method is carried out when the above-mentioned computer program is executed by the control system.

The control system may comprise at least one processor and/or at least one programmable logic controller, plc for short. Additionally, the control system may comprise one or more drive control modules which convert the operating setpoints into actual electric signals, e.g. PWM signals, with which drives are then controlled. The control system may be part of the wind turbine.

According to an embodiment, the control system comprises means with the help of which the actual torque difference between the actual torques exerted by the drives is determinable. The means may be the current sensors of the one or more drive control modules. As mentioned above, the actual torques or actual torque differences can be derived from the electric currents.

Alternatively, the control system may comprise particular means, like sensors, with the help of which the external load and/or the actual torque difference and/or the actual torques are directly determinable.

According to a further embodiment, the control system further comprises means, particularly sensors, with the help of which the actual rotational speeds of the drives are determinable. For example, the control system comprises incremental encoders, particularly one incremental encoder for each drive.

According to a further embodiment, the control system further comprises means, particularly a sensor, with the help of which the actual position of the rotatable component is determinable. For example, the control system comprises an incremental encoder assigned to the rotatable component.

Next, the wind turbine is specified.

According to an embodiment, the wind turbine comprises at least one rotatable component as well as at least two drives which are configured to rotate the rotatable component by exerting torques. The wind turbine further comprises the control system as specified herein. The control system is signally connectable or signally connected to the drives in order to enable an operation of the drives according to the operating setpoints.

Thus, the wind turbine is, in particular, configured to execute the method according to any of the embodiments described herein. When the method is executed, the drives are operated according to the operating setpoints.

The rotatable component of the wind turbine may be a component of the yaw system and/or the pitch system, like the nacelle or a nacelle carrier or a rotor blade or a rotor blade carrier.

Hereinafter, the method for operating a wind turbine, the control system and the wind turbine will be explained in more detail with reference to the drawings on the basis of exemplary embodiments. The accompanying figures are included to provide a further understanding. In the figures, elements of the same structure and/or functionality may be referenced by the same reference signs. It is to be understood that the embodiments shown in the figures are illustrative representations and are not necessarily drawn to scale. Insofar as elements or components correspond to one another in terms of their function in different figures, the description thereof is not repeated for each of the following figures. For the sake of clarity, elements might not appear with corresponding reference symbols in all figures.
Figure 1 shows an exemplary embodiment of the wind turbine,
Figure 2 shows an exemplary embodiment of a yaw system in a perspective view,
Figure 3 shows an exemplary embodiment of a yaw system in a cross-sectional view,
Figure 4 shows an exemplary embodiment of a yaw system in a top view,
Figure 5 shows a flowchart of an exemplary embodiment of the method for operating a wind turbine,
Figure 6 shows a an exemplary embodiment of the control system,
Figures 7 and 8 show an exemplary embodiment of the yaw system during operation with an exemplary embodiment of the method,
Figures 9 to 12 show an exemplary embodiment of the yaw system during operation with an exemplary embodiment of the method,
Figure 13 shows an exemplary embodiment of an operation of a drive control module.

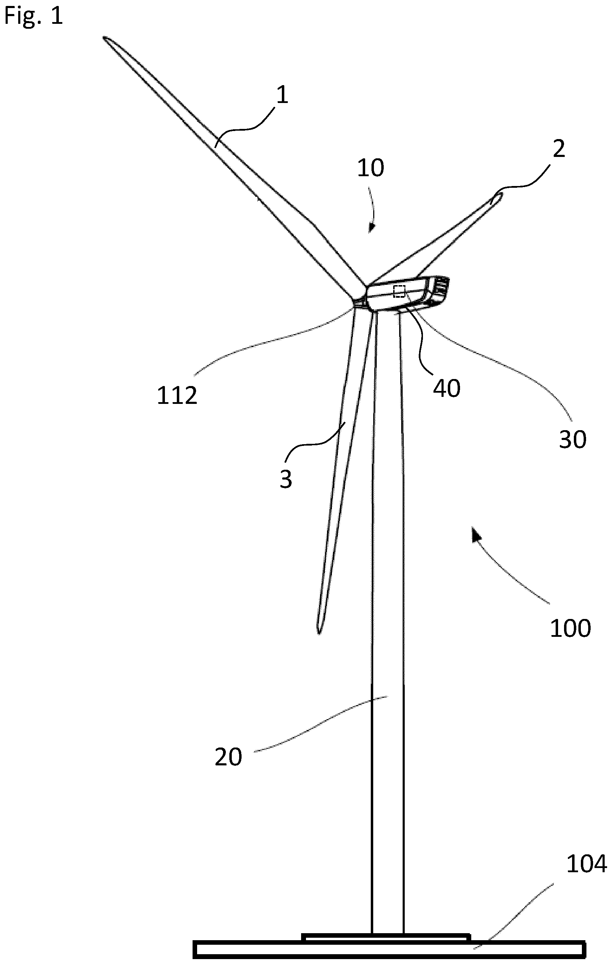

Figure 1 shows a wind turbine 100 which comprises a tower 20. The tower 20 is fixed to the ground by means of a foundation 104. A nacelle 40 is rotatably mounted at one end of the tower 20, opposite to the ground. The nacelle 40 comprises, for example, a generator which is coupled to a rotor 10 via a gearbox (not shown). The rotor 10 comprises three (wind turbine) rotor blades 1, 2, 3, which are arranged on a rotor hub 112, said rotor hub 112 being connected to a rotor shaft (not shown).

During operation, the rotor 10 is set in rotation by an air flow, for example wind. This rotational movement is transmitted to the generator via the drive train comprising, inter alia, the rotor shaft and the gearbox. The generator converts the mechanical energy of the rotor 10 into electrical energy.

For optimizing the energy output of the wind turbine 100, the nacelle 40 has to be rotated into the wind. Moreover, the pitch angles of the rotor blades 1, 2, 3 have to be set according to the wind speed. This is done with the help of drives (not shown) which rotate the rotor blades 1, 2, 3 and the nacelle 40 to a respective target position. In order to control and operate the drives, the wind turbine comprises a control system 30 which determines operating setpoints with which the drives are operated. The control system 30 is located in the nacelle 40.

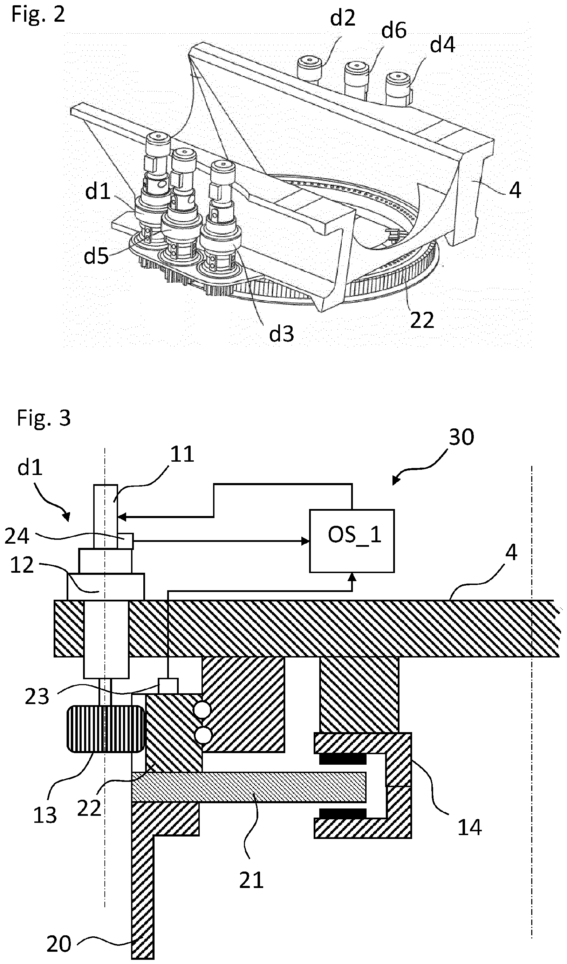

Figure 2 shows a detailed view of an exemplary embodiment of a yaw system, e.g. the yaw system of the wind turbine of figure 1. Here, the nacelle 40 itself is not shown, only the carrier 4 for the nacelle 40. This carrier 4 is rotatable together with the nacelle 40. In order to rotate the carrier 4, six drives d1 to d6 are mounted on the carrier 4. These drives d1 to d6 mesh with a yaw bearing 22 of the yaw system. The yaw bearing 22 is fixed with respect to, for example, the tower 20. The carrier 4 is rotated when the drives d1 to d6 rotate.

Figure 3 shows an exemplary embodiment of the yaw system, e.g. of the yaw system of figure 2, in more detail and in a cross-sectional view. The yaw bearing 22 is mounted on the tower 20. Moreover, a brake disk 21 is mounted to the tower 20. A brake caliper 14 is fixed to the carrier 4 and can be used to stop rotation of the carrier 4 and/or to hold the carrier 4 in position. The brake disk 21 and the brake caliper 14 are optional.

Figure 3 shows only one of the drives, namely drive d1. All other drives may be formed identically. Drive d1 comprises an electric motor 11. The electric motor 11 is operated depending on an operating setpoint OS_1 generated by the control system 30. Depending on the operating setpoint OS_1, drive d1 is rotated and thereby exerts a certain torque. The rotational speed and torque of the electric motor 11 are transmitted to a pinion 13 of the drive d1 with the help of a gearbox 12. The transmission ratio of the gearbox 12 is, for example, at least 100 or at least 500 so that the electric motor 11 rotates much faster than the pinion 13. On the other hand, the torque exerted by the pinion 13 onto the yaw bearing 22 is much larger than the torque provided by the electric motor 11.

In order to determine the actual position of the rotatable carrier 4, the control system 30 comprises an incremental encoder 23. The measurements taken with the help of the incremental encoder 23 are processed by the control system 30. Moreover, another incremental encoder 24 is provided, with the help of which the actual rotational speed of the electric motor 11 of drive d1 is determinable. These measurements are also processed by the control system 30. An individual incremental encoder 24 may be provided for each drive d1 to d6.

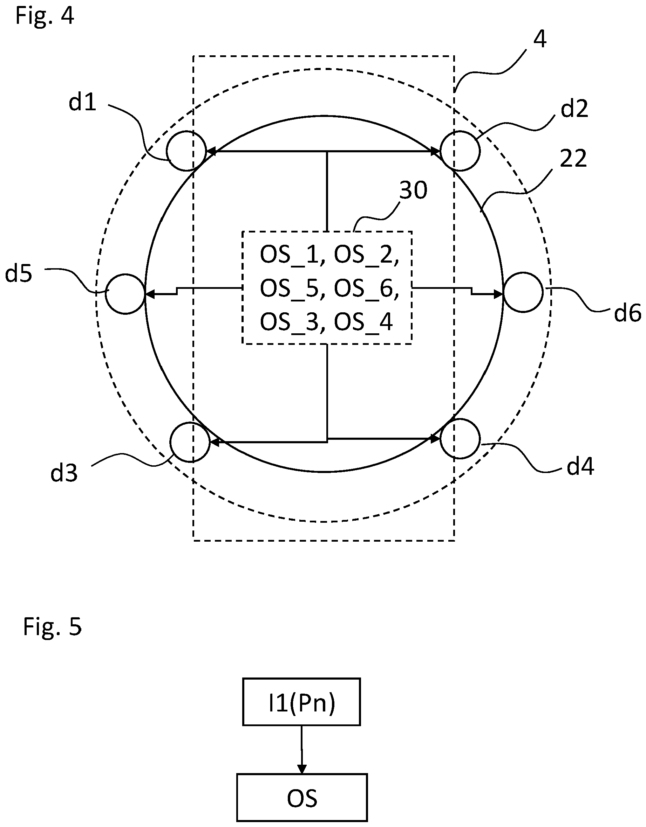

Figure 4 shows an exemplary embodiment of a yaw system, e.g. of the yaw system of figures 2 and 3, in top view. As can be seen here, all six drives d1 to d6 are operated according to corresponding operating setpoints OS_1 to OS_6, OS_i for short, determined with the control system 30. The operating setpoints OS_i may be configured such that different drives d1 to d6, di for short, exert different torques.

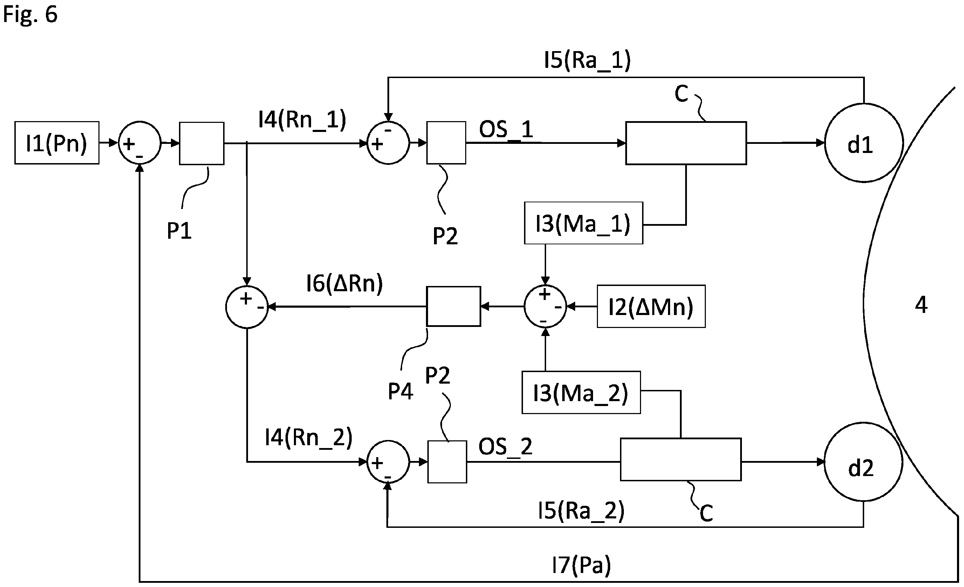

How this can be achieved will now be explained in more detail in connection with figure 6, showing an exemplary embodiment of a control system for a wind turbine. For better illustration, only the drives d1 and d2 are shown.

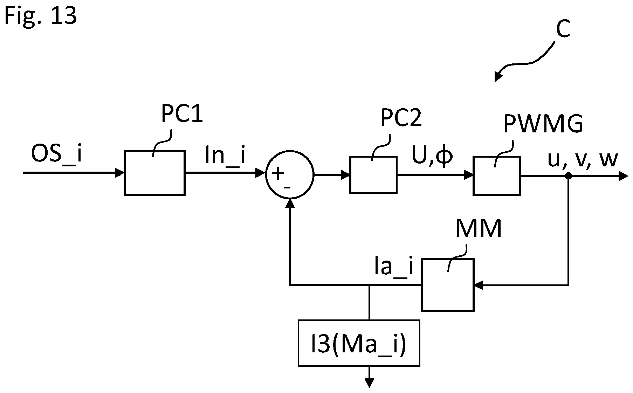

In figure 6, a first information I1, which is representative of a position setpoint Pn of the carrier 4, is provided. Depending on this first information I1 and seventh information 17, a position controller P1 determines fourth information 14. The fourth information I4 is representative of rotational speed setpoints Rn_1 to Rn_6, Rn_i for short, of the drives di. Depending on this fourth information 14, speed controllers P2 determine and generate operating setpoints OS_i, which are, e.g. torque setpoints. Drive control modules C convert the torque setpoints OS_i into actual electric signals with which the drives di are operated so that the drives di bring or keep the carrier 4 at the position setpoint Pn. The drive control modules C are explained in more detail in connection with figure 13.

The seventh information I7 is representative of the actual position Pa of the carrier 4 and can be determined, for example, with the help of the incremental encoder 23 as described in connection with figure 3. The seventh information I7 and the first information I1 are used in a negative feedback loop. From the deviation between the actual position Pa and the nominal Position Pn, the position controller P1 determines the fourth information I4.

Moreover, in order to achieve that the drives di rotate with the rotational speed setpoints Rn_i, fifth information I5 is provided which is representative of the actual rotational speeds Ra_i of the drives di. The fifth information I5 can be determined with the help of the incremental encoders 24, as explained in connection with figure 3. The fifth information I5 is used together with the fourth information I4 in negative feedback loops in order to minimize the respective differences between the rotational speed setpoints Rn_i and the actual rotational speeds Ra_i. The speed controllers P2 determine the operating setpoints OS_i, depending on the deviation between the actual rotational speeds Ra_i and the rotational speed setpoints Rn_i.

As mentioned before, the drives d1, d2 may be operated such that they exert different torques. For this purpose, second information I2 is provided which is representative of a torque difference setpoint ΔMn. The torque difference setpoint ΔMn is compared to the actual torque difference ΔMa between the actual torques Ma_i of the drives. The actual torque difference can be derived from a third information I3 which is representative of the actual torques Ma_i of the drives di. The actual torques Ma_i of the drives di can be extracted from drive control modules C used for operating the drives by using the electric signals with which the motors are actually operated.

Depending on the second I2 and the third I3 information, a sixth information I6 is determined using a negative feedback loop. The sixth information I6 is representative of an offset rotational speed ΔRn and is determined with the help of a tension controller P4 depending on the deviation between the actual torque difference and the torque difference setpoint ΔMn. For example, the offset rotational speed ΔRn is determined such that it increases with increasing difference between the torque difference setpoint ΔMn and the actual torque difference.

As can be seen in figure 6, the offset rotational speed ΔRn is subtracted from the rotational speed setpoint Rn_1 determined for drive d1 and the resulting value of the rotational speed is used as the rotational speed setpoint Rn_2 for the drive d2. In this way, a torque difference can be realized between drive d_1 and drive d_2.

A possible way to operate the yaw system of figures 2 to 4, e.g. with the control system of figure 6, is to group the drives into two groups. The left group or first group, respectively, comprises drives d1, d3 and d5. The right group or second group, respectively, comprises drives d2, d4 and d6. Drive d1 may be the master drive. The torques exerted by all other drives may be selected depending on the torque exerted by drive d1. For example, drives d3 and d5 are operated such that they always exert the same torque as drive d1. The drives of the right group, i.e. drives d2, d4 and d6, may be operated such that they always exert the same torques but torques with absolute values or numeric values which are lower or at most the same as the absolute value or numeric value of the torque of drive d1. The torques of the left side and of the right side may differ from each other by a torque difference setpoint, e.g. of 10 Nm.

A consequence of this is that, when a certain external torque acts on the carrier 4 which the drives have to fight against, the drives of one of the groups, let's say of the first group, may exert a torque which is close to 0 Nm. In this "undefined state" of the drives of the first group, small changes in the external torque may lead to a switch from positive to negative torque and vice versa for the three drives d1, d3, d5 of the first group. This creates backlash movements and banging noises.

One object of the present invention is now to prevent unstable operation conditions and banging noises during operation of the yaw system. This is, inter alia, achieved by the methods described in the following. These methods can, in particular, be executed with the control system of figure 6. The methods are described on the basis of the yaw system but can likewise be applied to the pitch system of the wind turbine.

In the exemplary embodiment of the method for operating a wind turbine according to figure 5, first information I1 is provided. The first information I1 is representative of a position setpoint Pn of the carrier 4, i.e. a target position of the carrier 4. Operating setpoints OS_i for the different drives di are determined depending on the first information I1 such that, when the drives di are operated according to the operating setpoints OS_i, the drives di bring or keep the carrier 4 at the position setpoint Pn by exerting torques. The operating setpoints OS_i are thereby determined such that, at least when the position of the carrier 4 is to be kept constant, less than half of the drives di exerts a torque in a critical torque range RM around the value of 0.

The described method provides, inter alia, the technical advantage that damage to the yaw bearing and/or to the drives for rotating the carrier is reduced by avoiding having too many drives to operate at or near a torque of 0 Nm.

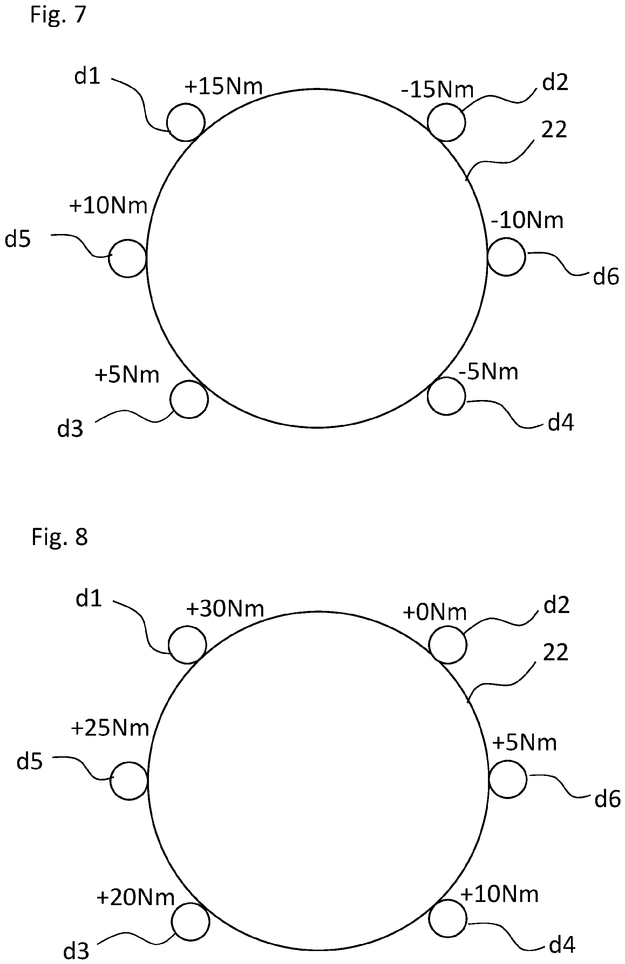

One concrete realization of the method is illustrated in figures 7 and 8. By way of example, the critical torque range RM is the range between -4 Nm and + 4Nm. However, depending on the given requirements, it may be set differently.

In the exemplary embodiment of Figure 7, all six drives di are permanently operated with different torques (the values of the torques exerted by the drives is indicated in figure 7). Thus, each two drives exert different torques. Figure 7 thereby shows the case in which the carrier 4 is kept in position (is not rotated) and no external torque is acting on the carrier 4 so that the total torque to be exerted by the drives d1 to d6 is zero. However, the drives are tensioned against each other due to the different torques. The torque differences are chosen such that none of the drives is operated in the critical torque range RM.

Figure 8 now shows the case in which an external torque acts onto the yaw system so that the operation of the drives d1 to d6 has to be changed. The total torque to be exerted by the drives is now different from zero in order to fight against the external torque. Again, the carrier 4 is kept in position, i.e. is not rotated. The external torque is such that one of the drives, namely drive d2, is operated with a torque of zero 0 Nm whereas all other drives are still operated outside the critical torque range. Thus, only one drive has to be operated in the critical torque range. This is achieved because all drives exert different torques.

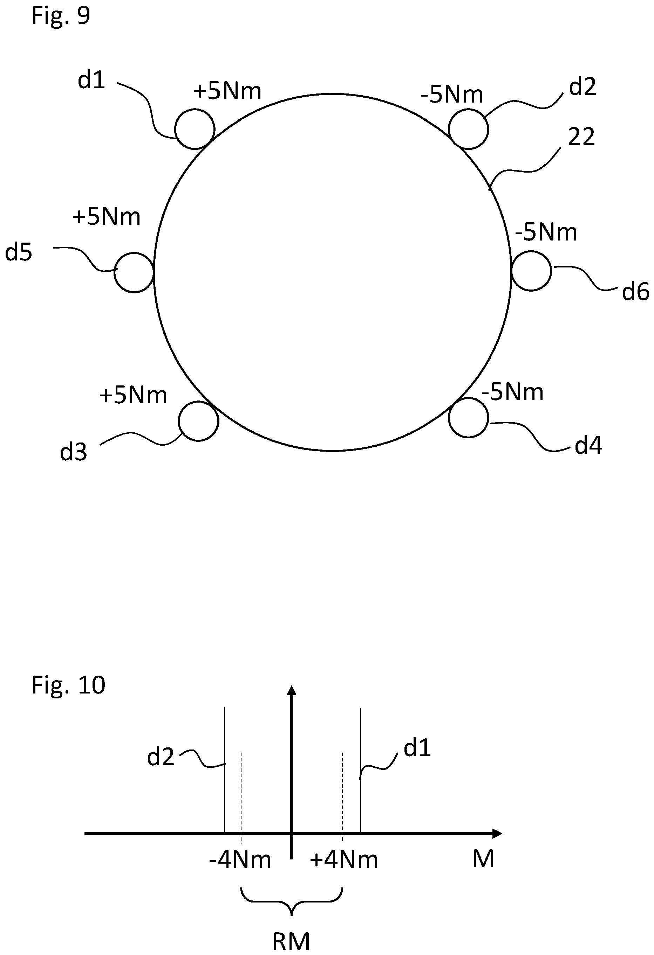

A further concrete realization of the method is illustrated in connection with Figures 9 to 12. In this exemplary embodiment, the drives are not all operated with individual torques. Instead, an operation mode is used in which all drives d1, d3 and d5 on the left side are operated with the same torques and all drives on the right side d2, d4 and d6 are operated with the same torques. Figure 9 shows the situation in which no external torque acts on the carrier 4 and the position of the carrier 4 is kept constant. Also here, the critical torque range RM is from -4 Nm to +4 Nm. Since the torque difference between the left side and the right side is set to 10 Nm (torque difference setpoint = 10 Nm), none of the drives exerts a torque in the critical torque range.

Figure 10 illustrates the situation of figure 9 in a graph with the x-axis showing the torques of drives d1 and 2. Drive d1 is thereby representative for all drives on the left side and drive d2 is representative for all drives on the right side.

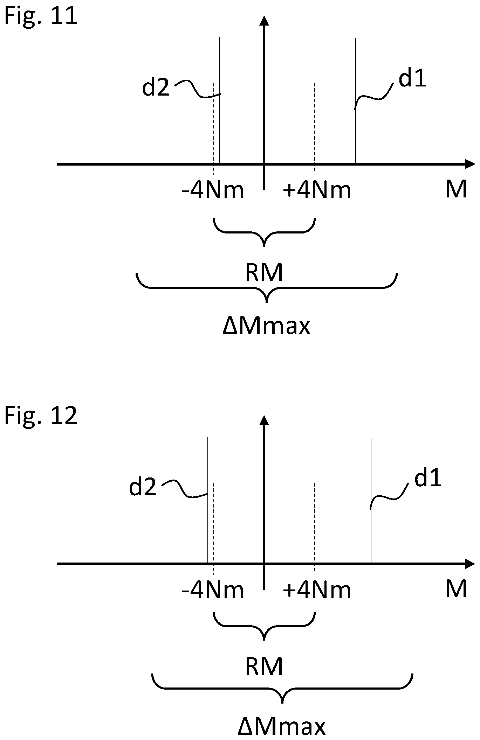

Figure 11 shows a new situation in which the external torque changes so that the torques to be exerted by the drives d1 and d2 have to be changed. When the position of the carrier should be kept constant and if the torque difference setpoint of 10 Nm would be maintained, drive d2 has to be operated in the critical torque range RM, wherein drive d1 is operated outside the critical torque range RM.

In order to avoid this, the torque difference setpoint is adapted during operation, namely increased, e.g. to 15 Nm (see figure 11). Adaption of the torque difference setpoint is done such that drive d2 is also operated outside the critical torque range RM. Thus, all drives are operated outside the critical torque range RM. However, the torque difference setpoint is kept below a maximum allowed torque difference setpoint ΔMmax.

This method could also be applied in the case shown in figures 7 and 8, where all drives are operated with different torques. For example, when considering figure 8, it could even be avoided that drive d2 is operated in the critical torque range by changing the torque difference setpoints.

Figure 13 illustrates the operation of a drive control module C. A current converter PC1 determines a current setpoint In_i depending on the operating setpoint OS_i, which is the torque setpoint in this example. A further controller PC2 (e.g. a PI-controller) determines an absolute voltage value U and a phase shift φ depending on the current setpoint In_i and the actual current Ia_i. PWM-generators PWMG generate corresponding PWM signals with which IGBTs (not shown) are energized. The output thereof is three different phases u, v, w with which the drives di are then operated. Moreover, a motor model MM determines the actual current Ia_i, depending on the phases u, v, w. The actual current Ia_i and the current setpoint In_i are used in a negative feedback loop to adapt the voltage value U and the phase shift φ. Furthermore, the third information I3 is determined depending on the determined actual current Ia_i.

The invention described herein is not limited by the description in conjunction with the exemplary embodiments. Rather, the invention comprises any new feature as well as any combination of features, particularly including any combination of features in the patent claims, even if said feature or said combination per se is not explicitly stated in the patent claims or exemplary embodiments.

### Reference sign list:

- 1: first rotor blade
- 2: second rotor blade
- 3: third rotor blade
- 4: nacelle / nacelle carrier
- 10: rotor
- 11: electric motor
- 12: gearbox
- 13: pinion
- 14: break caliper
- 20: tower
- 21: brake disc
- 22: yaw bearing
- 23: incremental encoder
- 24: incremental encoder
- 30: control system
- 100: wind turbine
- 104: foundation
- 112: rotor hub

- I1: first information
- I2: second information
- I3: third information
- I4: fourth information
- I5: fifth information
- I6: sixth information
- I7: seventh information

- OS_i: operating setpoint
- di: drive
- Pn: position setpoint
- Pa: actual position
- ΔMn: torque difference setpoint
- ΔMa: actual torque difference
- Rn_i: rotational speed setpoint
- Ra_i: actual rotational speed
- Ma_i: actual torque
- ΔRn: rotational speed offset
- RM: critical torque range
- ΔMmax: maximum allowed torque difference setpoint
- C: motor control module
- PC1: current converter
- PC2: further controller
- U: absolute voltage
- Φ: phase shift
- In_i: current setpoint
- Ia_i: actual current
- PWMG: PWM generator
- u, v, w: phases
- MM: motor model

## Claims

1. Method for operating a wind turbine (100) with a rotatable component (1 to 4) and with at least two drives (di) for rotating the rotatable component (1 to 4) by exerting torques, wherein the method comprises the steps of
- providing first information (I1) which is representative of a position setpoint (Pn) of the rotatable component (1 to 4),
- determining operating setpoints (OS_i) for the drives (di) depending on the first information (I1)
- such that, when the drives (di) are operated according to the operating setpoints (OS_i), the drives (di) bring or keep the rotatable component (1 to 4) at the position setpoint (Pn) by exerting torques, and
- such that, at least when the position of the rotatable component (1 to 4) is to be kept constant, less than half of the drives (di) exert a torque in a critical torque range (RM) around the value of 0.

2. Method according to claim 1, wherein
- the wind turbine (100) comprises at least three drives (di) for rotating the rotatable component (1 to 4),
- the operating setpoints (OS_i) are determined such that, at least when the position of the rotatable component (1 to 4) is to be kept constant, each two drives (di) exert different torques.

3. Method according to claim 1 or 2, wherein
- the critical torque range (RM) is any range between
- 0.2·|Mmax| and +0.2·|Mmax| and including the value of 0, wherein Mmax is the value of the maximum torque which can be provided by a single drive (di),
- the operating setpoints (OS_i) are determined such that, at least when the position of the rotatable component (1 to 4) is to be kept constant, at most one drive (di) exerts a torque in the critical torque range (RM).

4. Method according to any one of the preceding claims, further comprising
- providing second information (I2) which is representative of a torque difference setpoint (ΔMn) between the torques exerted by the drives (di),
- the operating setpoints (OS_i) are determined also depending on the second information (I2) in order to make the torques exerted by the drives (di) to fulfill the torque difference setpoint (ΔMn).

5. Method according to claim 4, wherein
- the second information (I2) is determined during operation of the wind turbine (100),
- determining the second information (I2) comprises adapting the torque difference setpoint (ΔMn) in order to avoid drives (di) to exert torques in the critical torque range (RM), at least when the position of the rotatable component (1 to 4) is to be kept constant.

6. Method according to claim 5, wherein
- if, with a previously provided torque difference setpoint (ΔMn), the operating setpoints (OS_i) can only be determined such that at least one drive (di) would have to be operated with a torque in the critical torque range (RM) in order to keep the rotatable component (1 to 4) in the constant position, the torque difference setpoint (ΔMn) is changed such that, with the operating setpoints (OS_i) determined with this changed torque difference setpoint (ΔMn), all drives (di) will exert torques outside the critical torque range (RM) while keeping the rotatable component (1 to 4) in the constant position.

7. Method according to any one of claims 4 to 6, further comprising
- providing third information (I3) which is representative of the actual torque difference (ΔMa) between the actual torques (Ma_i) exerted by the drives (di),
- the operating setpoints (OS_i) are determined also depending on the third information (I3), namely by using a feedback loop with the second (I2) and the third (I3) information as input information so that the difference between the torque difference setpoint (ΔMn) and the actual torque difference (ΔMa) is minimized.

8. Method according to any one of the preceding claims, further comprising
- providing fourth information (I4) which is representative of the rotational speed setpoints (Rn_i) of the drives (di) for bringing or keeping the rotatable component (1 to 4) at the position setpoint (Pn),
- providing fifth information (I5) which is representative of the actual rotational speeds (Ra_i) of the drives (di), wherein
- the operating setpoints (OS_i) are determined also depending on the fourth (I4) and the fifth (I5) information, namely by using further feedback loops with the fourth (I4) and the fifth information (I5) as input information so that the differences between the actual rotational speeds (Ra_i) and corresponding rotational speed setpoints (Rn_i) are minimized.

9. Method according to any one of the preceding claims, wherein
- the rotatable component (1 to 4) is a component (4) of a yaw system of the wind turbine (100).

10. Computer program comprising instructions which, when the program is executed by a control system, cause the control system to carry out the method of any one of claims 1 to 9.

11. Computer-readable data carrier having the computer program of claim 10 stored thereon.

12. Control system (30) comprising means for executing the method according to any one of claims 1 to 9.

13. Control system (30) according to claim 12, wherein
- the control system (30) comprises means with the help of which the actual torque difference (ΔMa) between the actual torques (Ma_i) exerted by the drives (di) is determinable.

14. Control system (30) according to claim 12 or 13, further comprising means (23, 24) with the help of which
- the actual rotational speeds (Ra_i) of the drives (di) are determinable, and/or
- the actual position (Pa) of the rotatable component (4) is determinable.

15. Wind turbine (100) comprising
- a rotatable component (1 to 4),
- at least two drives (di) for rotating the rotatable component (1 to 4) by exerting torques,
- the control system (40) according to any one of claims 12 to 14, wherein
- the control system (30) is signally connected to the drives (di) in order to enable an operation of the drives (di) according to the operating setpoints (OS_i).
